Europäisches Patentamt

**European Patent Office**  (11) Publication number: **0 052 873**

Office européen des brevets  **A2**

(19)

(12)  **EUROPEAN PATENT APPLICATION**

(21) Application number: **81109805.2**

(22) Date of filing: **20.11.81**

(51) Int. Cl.³: **B 31 F 1/00**
**B 29 C 17/03**

(30) Priority: **21.11.80 IT 2615480**

(43) Date of publication of application:
**02.06.82 Bulletin 82/22**

(84) Designated Contracting States:
**BE DE FR GB NL SE**

(71) Applicant: **Montedison S.p.A.**
**31, Foro Buonaparte**
**I-20121 Milan(IT)**

(72) Inventor: **Ciaccia, Vittorio**
**6, Via Parini**
**Ferrara(IT)**

(72) Inventor: **Credali, Lino**
**22, Via Calari**
**Casalecchio Di Reno (Bologna)(IT)**

(74) Representative: **Weinhold, Peter, Dr. Patentanwälte Dr.**
**V. Schmied-Kowarzik et al,**
**Dipl.-Ing. G. Dannenberg Dr. P. Weinhold, Dr. D. Gudel**
**Dipl.-Ing. S. Schubert, Dr. P. Barz Siegfriedstrasse 8**
**D-8000 München 40(DE)**

(54) **Process for the preparation of bodies molded from cardboard of the corrugated type containing synthetic fibres.**

㊼ Formed bodies are obtained by thermoforming corrugated cardboard containing at least 30% by weight of thermoplastic fibrils of high specific surface area, the forming operations consisting in:

(a) heating of the cardboard at temperatures equal to or greater than the melt temperature of the fibrils;

(b) introducing the cardboard thus heated into a press or forming mold, and

(c) allowing the cardboard thus heated to cool down in said press or mold at a temperature below the melt temperature of the fibrils.

(c) cooling of the cardboard to a temperature below that of the fibril-forming polymer.

2) Process according to claim 1, characterized in that heating operation (a) is carried out at a temperature greater by 25°C than the melt temperature of the fibril-forming polymer.

3) Process according to claims 1 and 2, characterized in that the fibril-forming polymer is an olefinic polymer.

4) Manufactured products based on corrugated cardboard obtained through the process according to claims from 1 to 3.

EP 0 052 873 A2

The present invention concerns a process for the preparation of formed or molded bodies, which process is achieved by thermo-molding a cardboard of the corrugated type consisting at least partly of thermoplastic synthetic polymer fibres.

It is known from French Patent Specification 78 13 5o7 filed in the name of the same Applicant, to prepare a kind of corrugated, mono- or multi-wave cardboard, using for the formation of the "liners" and/or of the wave, a fibrous material in the form of thermoplastic polymer fibrils endowed with a specific surface area of at least 1 $m^2$/g, in admixture with celluloselike fibres.

It has now been found by the Applicant that the cardboard of the corrugated type, consisting, that is, of at least one ensemble of two flat liners with sandwiched in between a sheet of corrugated shape, and in which sandwich the sheets contain at least 30% by weight of said thermoplastic fibrils, said ensemble being particularly suited for preparing variously shaped manufactured articles by means of a thermoforming process consisting in the following operations:

(a) heating the above mentioned cardboard at a temperature equal to or greater than the melt temperature of the thermoplastic polymer that forms the fibrils used for the preparation of the cardboard, and preferably greater by at least 25°C than said melt tem perature, for a time sufficient to melt said polymer;

(b)  compressing the cardboard thus heated in a press or mold having the shape of the article one wishes to obtain;

(c)  cooling of the cardboard down to a temperature lower than the softening temperature of the above mentioned polymer.

Said thermoforming process is applied to the corruga ted cardboard obtained by any method, provided that such a cardboard contains in the "liners" and in the corrugated -me dium   at least 30% by weight of fibrils of at least  one thermoplastic synthetic polymer, said fibrils having a spe cific surface area of at least 1 m$^2$/g, and that at least one of the 'liners' be fixed onto the apexes or tips of the corrugated/medium by means of thermowelding through the melting of the thermoplastic polymer forming the fibrils, at the points of contact of said 'liners' with the wavy layer.
The remaining fibres present in the cardboard are preferably cellulosic fibres or mixes of cellulosic fibres with non-thermoplastic synthetic fibres, or with animal fibres.

The cardboard, to which is applied the above described thermoforming process, preferably contains from 30% to 90% by weight of such fibrils.

When speaking of corrugated cardboard containing at least 30% by weight of fibrils of such specific surface area, reference is actually made to both the cardboard that contains in the liners and in the corrugated medium said fibrils in an unaltered fibrous form, as well as to the cardboard in which at least part of said fibrils have lost their original fibrous shape following the melting and/or compression treatments under heat preceding the thermoforming operation.

Thus, object of this invention is that of providing a process for the preparation of manufactured articles, which process consists in subjecting the corrugated cardboard,     consisting of at least one wavy layer interposed between two "liners", and in which both the liners and the wavy layer contain at least 30% by weight of fibrils of at least one thermoplastic polymer, endowed with a specific surface area of at least 1 $m^2/g$, and wherein at least one of the liners is thermowelded to the apexes or tips of of the corrugated medium, and of above described operations from (a) to (c).

The thermoforming operation takes place by compressing the cardboard, heated up to the above specified temperature, in a press or in a forming mold into which it had been introduced.

Heating operation (a) may be carried out either in the above mentioned press or in the mold, fitted with suitable heating devices, in the absence of pressure, before compression operation (b). In such a case, cooling operation (c) will be conveniently carried out outside the press or mold, in a suitable container.

The heating operation may also be carried out exposing the cardboard, outside the press or forming mold, to sources of heat, for instance to infra-red lamps,or by introducing the cardboard into an oven heated with suitable means, for instance, hot air, or between the heated plates of a press, in the absence of pressure. In such cases, after, compression operation (b), the cooling down of the cardboard may be achieved in the forming press or mold themselves.

In the thermoforming operation there may also be used a cardboard whose 'liners' are coupled with sheets of pa
per, fabrics, unwoven fabrics or similar materials, having
also a decorative function, thereby obtaining thermoformed, composite manufactured articles possessing a particu
larly strong adhesive force (strength) between the layers.

As previously stated, at least one of the liners for
ming the corrugated cardboard to be used in the process of
this invention, must be welded onto the apexes or tips of
the corrugated/following the thermofusion of the thermoplastic polymer forming the fibrils, to the points of con
tact between the liner and said medium.   The remaining
liners may be welded to the corresponding apexes or tips
of the wavy layer, with which they are in contact, by means
of conventional glues (adhesives), for instance starch, al
though it would be preferable that in both the mono-wave
as well as in the multi-wave cardboards the welding of the
liners onto the wavy layer by thermo-fusion (thermo-melting)
shall prevail over the welding obtained by simple applica
tion of glues.

Cardboards that may be used for the purpose of this invention,
in the way of examples, may be those prepared according to the
process described in French Patent Specification 78 13 5o7 and in
Italian Patent Application No. 23, 181 A/8o, using thermoplastic polymer fibrils according to what therein described.

Thanks to the capacity possessed by the corrugated medium in the cardboard of the above defined characteristics, to slip tangentially to the plane of the liners following bending under thermoforming conditions, there may be obtained by deep-drawing thermoformed objects with bending angles absolutely unattainable with conventional cardboards, such as are required in numerous applications, for instance in the automotive field, for canopies, rear shelves for hats, front shelves for small objects, and other such like accessories.

The following examples are given for purely illustrative and exemplifying purposes, without any limiting of the inventive scope of this invention.

EXAMPLE n° 1:

By means of a continuous flat-table paper machine there was prepared some paper, starting from a fibre mixture in aqueous suspension, consisting of:

- 30% by weight of polyethylene fibrils (melt temperature equal to 135°C), 2-3 mm long, with a mean diameter of 18 micron ($\mu$); and a specific surface area of 5 $m^2$/g, which contained incorporated 30% by weight of kaolin;

./.

- 70% by weight of bleached conifer cellulose.

This paper was then calandered on a cylinder calander at a temperature of 155°C, under a pressure of 80 Kg/cm . Part of the paper thus prepared and treated was thereupon conveyed to a corrugating unit of the "Onda C" type, which worked at a temperature of 180°C, and where the paper was thermoformed to a corrugated sheet.

At the same time, to the same corrugating unit there there was fed a second sheet of the same paper which was thermowelded to the apexes of the corrugated sheet, thereby for ming the first 'liner'. Another sheet of the same paper (second liner) was made to adhere to the apexes of the wavy element opposite to the "hot plates" of the corrugating machine, likewise by thermofusion.

The cardboard thus obtained showed the following cha- racteristics:

| | | |
|---|---|---|
| Total weight | 930 | $g/m^2$ |
| Weight of the "liners" | 180 | $g/m^2$ |
| Weight of the corrugated sheet | 400 | $g/m^2$. |

The cardboard thus obtained was placed between the heated plates of the press where it was heated to 190°C for 2.5 minutes, in the absence of pressure, and the plates of the press at simple contact with the cardboard.

The cardboard thus obtained was then introduced and maintained for 0.5 minutes in a molding press with cold metal molding dies of the female-male type. This press was fitted with a controlled clamping power so as not to deform the wave of the cardboard.

Once room temperature had been attained in the press, the cardboard sheet was extracted from the mold. It repro duced exactly the shapeof the mold cavity, with a drewing depth of 15 cm and bending angles of up to 90°..

EXAMPLE N° 2:

The same cardboard pf example 1 was introduced, with out pre-heating and in a stretched out position, into the same metal mold press of example 1, which, however, was heated up to 190°C. The mold halves were kept half-closed, in contact with the surface of the cardboard but without exerting any pressure on the same until the cardboard had not reached the same temperature in all its points. The mold halves were then closed and the cardboard,deep drawn under heat as in the preceding example 1, was subsequently extracted from the press and allowed to cool down at room temperature in a special container.

0052873

- 10 -

THe cardboard reproduced then exactly the shape of the mold cavity without any substantial alteration of the wave.

C  L  A  I  M  S
=================

1) Process for the preparation of manufactured articles,
consisting in subjecting a corrugated cardboard, in
whioch the 'liners' and the wavy layer or sheet contain at least 30% by weight of fibrils of at least one
thermoplastic synthetic polymer, having a specific sur
face area of at least 1 $m^2/g$ , and in which at least
one of the 'liners' is welded to the tips or apexes of
the wavy layer following the thermofusion of the fibril-
-forming polymer, at the points of contact between liner
and wave, to the following operations:

(a) heating the cardboard at a temperature equal to or
greater than the melting temperature of the fibril-
-forming polymer, for a time sufficient to cause its
melting;

(b) compressing the cardboard, thus heated, in the press
or molding die having the shape of the manufactured
article to be obtained:

./.

(c) cooling of the cardboard to a temperature below that of the fibril-forming polymer.

2) Process according to claim 1, characterized in that heating operation (a) is carried out at a temperature greater by 25°C than the melt temperature of the fibril-forming polymer.

3) Process according to claims 1 and 2, characterized in that the fibril-forming polymer is an olefinic polymer.

4) Manufactured products based on corrugated cardboard obtained through the process according to claims from

1 to 3.